# EUROPEAN PATENT APPLICATION

(11) **EP 4 730 421 A1**
(43) Date of publication of application: **22.04.2026**
(21) Application number: 25207388.7
(22) Date of filing: 08.10.2025
(51) Int. Cl.: H01M 4/133, H01M 4/134, H01M 4/1393, H01M 4/1395, H01M 4/38, H01M 4/587, H01M 4/62

(54) **NEGATIVE ELECTRODES AND RECHARGEABLE LITHIUM BATTERIES INCLUDING THE SAME**

(30) Priority: 15.10.2024 KR 20240140556; 07.08.2025 KR 20250109282
(71) Applicant: SAMSUNG SDI CO., LTD., Yongin-si, Gyeonggi-do 17084 (KR)
(72) Inventor: CHOI, Woosung, Gyeonggi-do 17084 (KR); KIM, Haeju, 17084 Gyeonggi-do (KR); DOO, Jaegyun, 17084 Gyeonggi-do (KR); JUNG, Meenkyoung, 17084 Gyeonggi-do (KR); JUNG, Wonil, 17084 Gyeonggi-do (KR)
(74) Representative: Michalski Hüttermann & Partner Patentanwälte mbB

(57) **Abstract**

A negative electrode may include a negative electrode current collector, a first negative electrode active material layer on the negative electrode current collector, and a second negative electrode active material layer on the first negative electrode active material layer, wherein the first negative electrode active material layer includes a first carbon-based active material, a silicon-based active material, and a carbon nanotube, the carbon nanotube is in an amount of about 0.01 wt% to about 0.2 wt% based on a total of 100 wt% of the first negative electrode active material layer, the second negative electrode active material layer includes a second carbon-based active material, the first carbon-based active material includes artificial graphite and natural graphite at a weight ratio of about 0:10 to about 5:5, and the second carbon-based active material includes artificial graphite and natural graphite at a weight ratio of about 5:5 to about 10:0.

## Description

### BACKGROUND

### 1. Field

One or more embodiments of the present disclosure relate to a negative electrode and a rechargeable lithium battery including the negative electrode.

One or more embodiments of the present disclosure relate to a method of manufacturing a negative electrode.

### 2. Description of the Related Art

Recently, with the rapid spread of electronic devices that utilize batteries, such as mobile phones, laptop computers, and/or electric vehicles, the demand or desire for rechargeable batteries with high energy density and high capacity (e.g., high initial charge/discharge capacity) has been increasing significantly. Accordingly, research and development efforts to improve or enhance the performance of rechargeable lithium batteries are actively underway.

A rechargeable lithium battery may include a positive electrode and a negative electrode, each including an active (e.g., electrically active) material capable of intercalating and deintercalating lithium ions, and an electrolyte solution. Electrical energy is generated through oxidation and reduction reactions if (e.g., when) lithium ions are intercalated and deintercalated between the positive electrode and the negative electrode.

Because the rechargeable lithium batteries are repeatedly charged and discharged during utilization, their performance may vary depending on the charge/discharge state. Therefore, efforts have been made to enhance the performance of rechargeable lithium batteries by improving or enhancing charging methods and electrode materials.

### SUMMARY

One or more aspects of embodiments of the present disclosure are directed toward a negative electrode that may economically prevent deterioration (or reduce a degree or occurrence of deterioration), during, for example, battery operation.

One or more aspects of embodiments of the present disclosure are directed toward a rechargeable lithium battery having excellent or suitable rapid charging cycle-life characteristics by including the negative electrode.

Additional aspects of embodiments will be set forth in part in the description which follows and, in part, will be apparent from the description or may be learned by practice of the presented embodiments of the disclosure.

One or more embodiments of the present disclosure provide a negative electrode including a negative electrode current collector, a first negative electrode active (e.g., electrically active) material layer on the negative electrode current collector, and a second negative electrode active (e.g., electrically active) material layer on the first negative electrode active material layer,
wherein the first negative electrode active material layer includes a first carbon-based active (e.g., electrically active) material, a silicon-based active (e.g., electrically active) material, and a carbon nanotube,
the carbon nanotube is included in an amount of ≥ 0.01 wt% to ≤ 0.2 wt% based on a total of 100 wt% of the first negative electrode active material layer,
the second negative electrode active material layer includes a second carbon-based active (e.g., electrically active) material,
the first carbon-based active material includes artificial graphite and natural graphite at a weight ratio of about 0:10 to about 5:5, and
the second carbon-based active material includes artificial graphite and natural graphite at a weight ratio of about 0:10 to about 10:0.

One or more embodiments of the present disclosure provide a rechargeable lithium battery including the negative electrode as described in one or more embodiments; a positive electrode including positive electrode active material ; and a separator between the positive electrode and the negative electrode.

In one or more embodiments, the rechargeable lithium battery may have (or exhibit) a capacity retention of at least about 85% after 500 cycles at 1C and 25 °C.

One or more embodiments of the present disclosure provide a method of manufacturing a negative electrode, which includes preparing a first slurry, the first slurry including a first carbon-based active material, a silicon-based active material, and carbon nanotubes, the carbon nanotubes being present at ≥ 0.01 wt% to ≤ 0.2 wt% based on a total of 100 wt% of a resulting first negative electrode active material layer, and the silicon-based active material being present at ≥ 1 wt% to ≤ 40 wt% based on a total of 100 wt% of the first negative electrode active material layer; coating the first slurry on a negative electrode current collector to form the first negative electrode active material layer; preparing a second slurry, the second slurry including a second carbon-based active material; coating the second slurry on the first negative electrode active material layer to form a second negative electrode active material layer; and drying and compressing the first negative electrode active material layer and the second negative electrode active material layer, wherein a weight fraction of natural graphite in the first carbon-based active material is greater than a weight fraction of natural graphite in the second carbon-based active material.

The negative electrode according to one or more embodiments may have the advantage or benefit of economically reducing or preventing deterioration (e.g., lithium plating, excessive or substantial solid electrolyte interphase (SEI) growth, or particle cracking) during repeated charge/discharge cycles, for example, under high-rate charging conditions. By employing a multilayer structure in which a first negative electrode active material layer includes a combination of a first carbon-based active material, a silicon-based active material, and a set amount of carbon nanotubes, and a second negative electrode active material layer includes a second carbon-based active material with a different artificial-to-natural graphite ratio, the electrode may achieve improved or enhanced mechanical stability, enhanced lithium-ion diffusion pathways, and enhanced electronic conductivity. The inclusion of carbon nanotubes in the first layer in an amount of ≥ 0.01 wt% to ≤ 0.2 wt% may provide a conductive (e.g., electrically conductive) network that reduces internal resistance without significantly or substantially increasing cost or compromising electrode density. The silicon-based active material in the first layer may contribute to higher capacity, while its controlled content (e.g., amount; e.g., ≥ 1 wt% to ≤ 40 wt%) and optional inclusion in the second layer at a lower level (e.g., >0 wt% to ≤ 10 wt%) may help balance energy density with cycle-life stability. The utilization of different artificial-to-natural graphite ratios in the first and second layers (e.g., about 0:10 to about 5:5 in the first layer and about 5:5 to about 10:0 in the second layer) may allow for enhancement of structural integrity and rate performance. This configuration or arrangement, combined with appropriate or suitable binder and conductive (e.g., electrically conductive) agent contents, layer thickness ratios (e.g., about 4:1 to about 1:4), and calendaring density, may enable the rechargeable lithium battery to exhibit excellent or suitable rapid-charging cycle-life characteristics while maintaining high energy density because it includes the negative electrode.

### BRIEF DESCRIPTION OF THE DRAWINGS

The accompanying drawings, together with the specification, illustrate embodiments of the subject matter of the present disclosure, and, together with the description, serve to explain principles of embodiments of the subject matter of the present disclosure.
FIG. 1 is a cross-sectional view schematically illustrating a negative electrode according to one or more embodiments.
FIG. 2 is a schematic perspective view illustrating a partially cutaway cylindrical rechargeable lithium battery.
FIG. 3 is a schematic cross-sectional view illustrating a prismatic rechargeable lithium battery.
FIGS. 4 and 5 are schematic exploded perspective views illustrating a pouch-type (kind) rechargeable lithium battery.
FIG. 6 is a graph evaluating the high-rate charge/discharge cycle-life characteristics of rechargeable lithium battery cells according to Example 1, Comparative Example 1, and Comparative Example 2.
FIG. 7 is a graph evaluating the normal-rate charge/discharge cycle-life characteristics of rechargeable lithium battery cells according to Example 1, Comparative Example 1, and Comparative Example 2.
FIG. 8 is a graph evaluating the volume expansion characteristics of rechargeable lithium battery cells according to Example 1, Comparative Example 1, and Comparative Example 2.
FIG. 9 is a graph evaluating the charge/discharge cycle-life characteristics of rechargeable lithium battery cells according to Example 1 and Comparative Example 1.
FIG. 10 is a scanning electron microscope (SEM) image of the negative electrode active material of the rechargeable lithium battery cell according to Example 1 after 500 cycles of operation.
FIG. 11 is a SEM image of the negative electrode active material of a rechargeable lithium battery cell according to Comparative Example 1 after 500 cycles of operation.

### DETAILED DESCRIPTION

The subject matter of the present disclosure will be described more fully hereinafter with reference to the accompanying drawings, in which embodiments of the present disclosure are shown. As those skilled in the art would realize, the described embodiments may be modified in one or more suitable different ways, all without departing from the spirit or scope of the present disclosure. The drawings and description are to be regarded as illustrative in nature and not restrictive. Like reference numerals designate like elements throughout the attached drawings and the written description, and duplicative descriptions thereof may not be provided in the specification.

The terminology used herein is used to describe one or more embodiments of the present disclosure only and is not intended to limit the scope of the present disclosure.

The utilization of "may" if (e.g., when) describing embodiments of the present disclosure refers to "one or more embodiments of the present disclosure."

In the context of the present application and unless otherwise defined, the terms "use," "using," and "used" may be considered synonymous with the terms "utilize," "utilizing," and "utilized," respectively.

As used herein, the singular forms "a," "an," and "the" are intended to include the plural forms as well, unless the context clearly indicates otherwise.

The singular expression includes the plural expression unless the context clearly dictates otherwise.

As used herein, the term "and/or" or "or" includes any and all combinations of one or more of the associated listed items. For example, "or" is not to be construed as an exclusive meaning, for example, "A or B" is construed to include A, B, A+B, and/or the like.

Throughout the present disclosure, the expressions, such as "at least one of," "one of," and "selected from," if (e.g., when) preceding a list of elements, modify the entire list of elements and do not modify the individual elements of the list. For example, "at least one of a, b, or c," "at least one selected from among a, b, and c," "at least one selected from among a to c," and/or the like indicates only a, only b, only c, both (e.g., simultaneously) a and b, both (e.g., simultaneously) a and c, both (e.g., simultaneously) b and c, all of a, b, and c, or variations thereof.

As utilized herein, the terms "substantially," "about," or similar terms are used as terms of approximation and not as terms of degree and are intended to account for the inherent deviations in measured or calculated values that would be recognized by those of ordinary skill in the art. "About" as used herein is inclusive of the stated value and refers to as being within an acceptable range of deviation for the particular value as determined by one of ordinary skill in the art, considering the measurement in question and the error associated with measurement of the particular quantity (e.g., the limitations of the measurement system). For example, "about" may refer to as being within one or more standard deviations or within ±30%, ±20%, ±10%, or ±5% of the stated value. Also, it should be understood that, even if (e.g., when) the terms "about," "approximately," or "substantially" are not expressly recited in a given element (e.g., a claim element), the scope of such element is intended to include variations that are insubstantial or within the understanding of one of ordinary skill in the art. For example, numerical values and ranges provided herein are intended to include tolerances and measurement uncertainties that would be recognized by those skilled in the art, and the elements (e.g., claim elements) should be construed accordingly to encompass such equivalents.

Any numerical range recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, for example, having a minimum value equal to or greater than 1.0 and a maximum value equal to or less than 10.0, such as, for example, 2.4 to 7.6. Any maximum numerical limitation recited herein is intended to include all lower numerical limitations subsumed therein and any minimum numerical limitation recited in the present disclosure is intended to include all higher numerical limitations subsumed therein. Accordingly, Applicant reserves the right to amend the disclosure, including the claims, to expressly recite any sub-range subsumed within the ranges expressly recited herein

As used herein, "combination thereof" refers to a mixture, a laminate, a composite, a copolymer, an alloy, a blend, a reaction product, and/or the like of the constituents.

Herein, it should be understood that terms, such as "has," "includes," "having," or "including," are intended to designate the presence of an embodied feature, number, step (e.g., act or task), element, or a combination thereof, but it does not preclude the possibility of the presence or addition of one or more other features, number, step (e.g., act or task), element, or a combination thereof. For example, it should be understood that the term "comprise(s)/comprising," "include(s)/including," or "have/has/having" specifies the presence of stated features, integers, steps (e.g., acts or tasks), operations, elements, and/or components, but do not preclude the presence or addition of one or more other features, integers, steps (e.g., acts or tasks), operations, elements, components, and/or groups thereof. Also, the terms "comprise(s)/comprising," "include(s)/including," "have/has/having," or similar terms include or support the terms "consisting of" and "consisting essentially of," indicating the presence of stated features, integers, steps (e.g., acts or tasks), operations, elements, and/or components, without or essentially without the presence of other features, integers, steps (e.g., acts or tasks), operations, elements, components, and/or groups thereof.

In the drawings, the thickness of layers, films, panels, regions, and/or the like may be exaggerated for clarity.

It will be understood that if (e.g., when) an element, such as a layer, a film, a region, or a substrate, is referred to as being "on" another element, it may be directly on the other element or intervening elements may also be present therebetween. In contrast, if (e.g., when) an element is referred to as being "directly on" another element, there are no intervening elements present therebetween.

The term "layer" herein includes not only a shape formed on the whole surface if (e.g., when) viewed from a plan view, but also a shape formed on a partial surface.

"Metal" is interpreted as a concept including ordinary metals, transition metals, and metalloids (semi-metals).

As used herein, if (e.g., when) a definition is not otherwise provided, the particle diameter may be an average particle diameter. Also, the particle diameter may refer to an average particle diameter (D₅₀), which refers to the diameter of particles having a cumulative volume of 50 volume% in the particle size distribution. The average particle diameter (D₅₀) may be measured by any suitable method that is generally available to or generally used by those skilled in the art, for example, by a particle size analyzer and/or by a transmission electron microscope (TEM) image and/or a scanning electron microscope (SEM) image. In one or more embodiments, a dynamic light-scattering (DLS) measurement device may be used to perform a data analysis, and the number of particles is counted for each particle size range. From this data, the average particle diameter (D₅₀) value may be easily obtained through a calculation. As used herein, if (e.g., when) a definition is not otherwise provided, the average particle diameter refers to a diameter (D₅₀) of particles having a cumulative volume of 50 volume% in the particle size distribution that is obtained by measuring the size (e.g., diameter or major axis length) of about 20 particles at random in a scanning electron microscope (SEM) image. In one or more embodiments, it may be measured using a laser diffraction method. If (e.g., when) measuring by the laser diffraction method, for example, the particles to be measured are dispersed in a dispersion medium, and then introduced into a commercially available laser diffraction particle diameter measuring device (e.g., Microtrac MT 3000), and ultrasonic waves of about 28 kHz with an output of 60 W are irradiated to calculate an average particle diameter (D₅₀) on the basis of 50% of the particle diameter distribution in the measuring device. Also, in the present disclosure, if (e.g., when) particles are substantially cylindrical or spherical, "diameter" refers to the average diameter of such particles. If (e.g., when) the particles are non-cylindrical or irregular in shape, "diameter" refers to the average major axis length of the particles.

### Negative Electrode

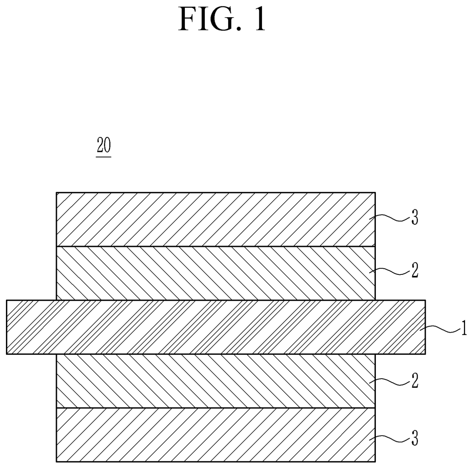

FIG. 1 is a cross-sectional view schematically illustrating a negative electrode 20 according to one or more embodiments.

Referring to FIG. 1, a negative electrode 20 according to one or more embodiments may include a negative electrode current collector 1, a first negative electrode active material layer 2 on the negative electrode current collector 1, and a second negative electrode active material layer 3 on the first negative electrode active material layer 2.

For example, the first negative electrode active material layer 2 may be arranged on a surface (e.g., one surface or both surfaces (e.g., two opposite surfaces)) of the negative electrode current collector 1.

For example, the first negative electrode active material layer 2 may be a layer that is in direct contact with the negative electrode current collector 1, and the second negative electrode active material layer 3 may be a layer at the outermost side in the stacking direction of the negative electrode 20.

The first negative electrode active material layer 2 may include a first carbon-based active (e.g., electrically active) material, a silicon-based active (e.g., electrically active) material, and a carbon nanotube, and the second negative electrode active material layer 3 may include a second carbon-based active (e.g., electrically active) material.

For example, the first carbon-based active material and the second carbon-based active material may include crystalline carbon, such as graphite, such as natural graphite and/or artificial graphite in the form of an irregular, plate-like, flake-like, spherical (e.g., substantially spherical), or fibrous (e.g., substantially fibrous) form.

The first carbon-based active material may include a larger amount of natural graphite than artificial graphite. For example, the first carbon-based active material may include artificial graphite and natural graphite at a weight ratio of about 0:10 to about 5:5. For example, the first carbon-based active material may include artificial graphite and natural graphite at a weight ratio of about 1:9 to about 5:5, a weight ratio of about 2:8 to about 5:5, or a weight ratio of about 2:8 to about 4:6.

Artificial graphite may have properties advantageous or beneficial to high-rate charging and discharging of rechargeable lithium batteries, and the natural graphite may have high bonding strength with other active (e.g., electrically active) materials or current collectors, thereby improving or enhancing the mechanical properties of the electrode plates and enhancing the cycle-life characteristics of rechargeable lithium batteries.

Because the first negative electrode active material layer includes a silicon-based active (e.g., electrically active) material and is expected to undergo a large volume change during charge and discharge, it may be desirable to increase an amount of natural graphite. In contrast, if (e.g., when) the first negative electrode active material layer includes a larger amount of artificial graphite than natural graphite, the cycle-life may be significantly or substantially reduced due to a decrease in the adhesive strength between the current collector and the active material.

For example, the second carbon-based active material may include a larger amount of artificial graphite than natural graphite. For example, the second carbon-based active material may include artificial graphite and natural graphite at a weight ratio of 5:5 to 10:0. For example, the second carbon-based active material may include artificial graphite and natural graphite at a weight ratio of about 5:5 to about 9:1, about 6:4 to about 9:1, about 7:3 to about 9:1, or about 7:3 to about 8:2.

In terms of high-rate charge/discharge characteristics, it may be desirable to increase a proportion of the artificial graphite, and considering economic aspects, natural graphite may be partially blended and included together. For example, the second carbon-based active material may include the artificial graphite and the natural graphite in the foregoing weight ratio, in which case both (e.g., simultaneously) the cycle-life characteristics and adhesive characteristics of the rechargeable lithium battery may be improved or enhanced.

For example, the first carbon-based active material may be included in an amount of ≥ 55 wt% to ≤ 98 wt%, for example, ≥ 60 wt% to ≤ 98 wt%, ≥ 70 wt% to ≤ 98 wt%, or ≥ 80 wt% to ≤ 98 wt% based on a total of 100 wt% of the first negative electrode active material layer 2.

For example, the second carbon-based active material may be included in an amount of ≥ 85 wt% to ≤ 99 wt%, for example, ≥ 90 wt% to ≤ 99 wt%, or ≥ 95 wt% to ≤ 99 wt% based on a total of 100 wt% of the second negative electrode active material layer 3. If (e.g., when) the foregoing numerical range is satisfied, the second negative electrode active material layer 2 mainly or predominantly including a carbon-based active material may be arranged at the outermost portion of the negative electrode, thereby effectively or suitably preventing deterioration (or reducing a degree or occurrence of deterioration) of the negative electrode during battery operation. In contrast, if (e.g., when) a large amount of silicon-based active material is included in the second negative electrode active material layer 3, a side reaction may occur between fragments of the deteriorated silicon-based active material and the electrolyte solution, which may deteriorate the cycle-life of the rechargeable lithium battery.

The first carbon-based active material and the second carbon-based active material may further include amorphous (e.g., non-crystalline) carbon, and the amorphous carbon may include soft carbon, hard carbon, a mesophase pitch carbonized product, calcined coke, or a (e.g., any suitable) combination thereof.

The first negative electrode active material layer 2 may include a silicon-based active (e.g., electrically active) material and a carbon nanotube.

The silicon-based active material may be a high-capacity active material and may be an essential component to increase battery capacity, but its volume changes due to expansion/contraction during charging and discharging may be large. Accordingly, there is a problem that the silicon-based active material may be mechanically broken into fragments, and the fragmented active material may have difficulty in physical contact with the conductive (e.g., electrically conductive) material, resulting in reduced reactivity. In one or more embodiments, there has been a problem in that a thick solid electrolyte interphase (SEI) film may be created due to a change in the volume of the silicon-based active material, which in turn increased the interfacial resistance. There has been a problem that the negative electrode may easily deteriorate due to such side effects, and this deterioration may be accelerated if (e.g., when) the rechargeable lithium battery is charged at high rate.

To solve this problem, if (e.g., when) applying silicon-based active materials to the negative electrode, conductive (e.g., electrically conductive) materials (e.g., an electron conductor), such as carbon nanotubes, were used to prevent or reduce negative electrode deterioration, but due to the high price of carbon nanotubes, there has been a limit to including them in large quantities in the negative electrode.

According to one or more embodiments, the negative electrode 20 may include the silicon-based active material and the carbon nanotubes concentrated in the first negative electrode active material layer 2 between the negative electrode current collector 1 and the second negative electrode active material layer 3.

Accordingly, by suppressing the volume expansion (or reducing a degree or occurrence of the volume expansion) of the active material layer and the formation of an SEI film during battery charging and discharging, the cycle-life characteristics of the rechargeable lithium battery (for example, the cycle-life characteristics during rapid charging) may be improved or enhanced. Also, it may be economical because it may implement higher level of cycle-life characteristics even if (e.g., when) it includes a small amount of carbon nanotubes compared to the generally-available negative electrode that utilizes a single layer of negative electrode active material containing silicon-based active material.

The silicon-based active material may be a material capable of doping and dedoping lithium.

For example, the silicon-based active material may include silicon, a silicon-carbon composite, SiOₓ (wherein 0 < x ≤ 2; e.g., SiO₂), a Si-Q alloy (wherein Q is selected from among an alkali metal, an alkaline earth metal, a Group 13 element, a Group 14 element (excluding (e.g., not including) Si), a Group 15 element, a Group 16 element, a transition metal, a rare earth element, and a (e.g., any suitable) combination thereof), or a (e.g., any suitable) combination thereof.

The silicon-carbon composite may be a composite of silicon and amorphous (e.g., non-crystalline) carbon. For example, the silicon-carbon composite may be in a form of silicon particles and amorphous (e.g., non-crystalline) carbon coated on the surface of the silicon particles. For example, the silicon-carbon composite may include a secondary particle (core) assembled with silicon primary particles and an amorphous (e.g., non-crystalline) carbon coating layer (shell) on the surface of the secondary particle. The amorphous carbon may also be between the primary silicon particles, and, for example, the primary silicon particles may be coated with the amorphous carbon. The secondary particle may exist dispersed in an amorphous (e.g., non-crystalline) carbon matrix.

The silicon-carbon composite may further include crystalline carbon. For example, the silicon-carbon composite may include a core including crystalline carbon and silicon particles and an amorphous (e.g., non-crystalline) carbon coating layer on a surface of the core.

For example, the silicon-based active material may be included in an amount of ≥ 1 wt% to ≤ 40 wt%, for example, ≥ 2 wt% to ≤ 30 wt%, ≥ 5 wt% to ≤ 20 wt%, ≥ 10 wt% to ≤ 20 wt%, or ≥ 10 wt% to ≤ 15 wt% based on a total of 100 wt% of the first negative electrode active material layer 2.

If (e.g., when) the silicon-based active material is included in less than about 1 wt% based on a total of 100 wt% of the first negative electrode active material layer 2, it may be difficult to implement a high-capacity negative electrode, and if (e.g., when) it is included in more than about 40 wt%, deterioration of the negative electrode may be aggravated.

The carbon nanotube may be included in the first negative electrode active material layer 2 as a conductive (e.g., electrically conductive) material (e.g., an electron conductor) and may play a role in improving or enhancing deterioration of the negative electrode due to inclusion of the silicon-based active material.

The carbon nanotube may be included in an amount of ≥ 0.01 wt% to ≤ 0.2 wt%, for example, ≥ 0.01 wt% to ≤ 0.1 wt%, ≥ 0.01 wt% to ≤ 0.05 wt%, ≥ 0.02 wt% to ≤ 0.05 wt%, ≥ 0.01 wt% to ≤ 0.04 wt%, or ≥ 0.02 wt% to ≤ 0.04 wt% based on a total of 100 wt% of the first negative electrode active material layer 2.

If (e.g., when) the foregoing numerical range is satisfied, it may be feasible to realize a higher level of cycle-life characteristics compared to the generally-available negative electrode that utilizes a single-layer negative electrode active material layer including a silicon-based active material while being economical by including a small amount of expensive carbon nanotube.

For example, the second negative electrode active material layer 3 may further include the silicon-based active material and the carbon nanotube.

The second negative electrode active material layer 3 may mainly or predominantly include a carbon-based active material and may not include a silicon-based active material and a carbon nanotube or may include small amounts thereof, thereby preventing the negative electrode from deteriorating (or reducing a degree to or occurrence of which the negative electrode deteriorates) during battery operation.

For example, the second negative electrode active material layer may further include the silicon-based active material, and based on a total of 100 wt% of the second negative electrode active material layer 3, the silicon-based active material may be included in an amount of more than about 0 wt% and less than or equal to about 10 wt%, for example, ≥ 0.01 wt% to ≤ 5 wt%, ≥ 0.01 wt% to ≤ 2.5 wt%, or ≥ 0.01 wt% to ≤ 1 wt%.

For example, the second negative electrode active material layer may further include the carbon nanotubes, and based on a total of 100 wt% of the second negative electrode active material layer 3, the carbon nanotubes may be included in an amount of more than about 0 wt% and less than or equal to about 0.2 wt%, for example, ≥ 0.001 wt% to ≤ 0.1 wt%, ≥ 0.001 wt% to ≤ 0.05 wt%, or ≥ 0.001 wt% to ≤ 0.01 wt%.

The first negative electrode active material layer and the second negative electrode active material layer may further include, in addition to the active materials as described in one or more embodiments, other negative electrode active materials including lithium metal, an alloy of lithium metal, a material capable of doping and dedoping lithium, and/or a transition metal oxide.

The lithium metal alloy may include an alloy of lithium and a metal selected from among sodium (Na), potassium (K), rubidium (Rb), cesium (Cs), francium (Fr), beryllium (Be), magnesium (Mg), calcium (Ca), strontium (Sr), silicon (Si), antimony (Sb), lead (Pb), indium (In), zinc (Zn), barium (Ba), radium (Ra), germanium (Ge), aluminum (Al), and tin (Sn).

As the material capable of doping and dedoping the lithium, a Sn-based negative electrode active material may be used. The Sn-based negative electrode active material may include Sn, SiOₓ (wherein 0 < x ≤ 2; e.g., SnO₂), a Sn-based alloy, or a (e.g., any suitable) combination thereof.

The first negative electrode active material layer and the second negative electrode active material layer may further include a binder and/or a conductive (e.g., electrically conductive) material (e.g., an electron conductor). For example, the first negative electrode active material layer may further include a first binder, and the second negative electrode active material layer may further include a second binder. The first binder and second binder may be substantially the same type (kind) or of different types (kinds).

The binder may serve to well or suitably attach the negative electrode active material particles to each other and also to well or suitably attach the negative electrode active material to the current collector. The binder may include a non-aqueous (e.g., water-insoluble) binder, an aqueous (e.g., water-soluble) binder, a dry binder, or a (e.g., any suitable) combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a (e.g., any suitable) combination thereof.

The aqueous binder may be selected from among a styrene-butadiene rubber, a (meth)acrylated styrene-butadiene rubber, a (meth)acrylonitrile-butadiene rubber, a (meth)acrylic rubber, a butyl rubber, a fluoro rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, and a (e.g., any suitable) combination thereof.

If (e.g., when) an aqueous (e.g., water-soluble) binder is used as the negative electrode binder, a cellulose-based compound capable of imparting or increasing viscosity may be further included. The cellulose-based compound may include at least one of carboxymethyl cellulose, hydroxypropylmethyl cellulose, methyl cellulose, or an alkali metal salt thereof. The alkali metal may include sodium (Na), potassium (K), and/or lithium (Li).

The dry binder may be a polymer material capable of being fibrous, and may be, for example, polytetrafluoroethylene, polyvinylidene fluoride, a polyvinylidene fluoride-hexafluoropropylene copolymer, polyethylene oxide, or a (e.g., any suitable) combination thereof.

For example, the first binder may be included in an amount of ≥ 0.1 wt% to ≤ 8.0 wt%, for example, ≥ 1.0 wt% to ≤ 8.0 wt%, ≥ 2.0 wt% to ≤ 5.0 wt%, or ≥ 2.0 wt% to ≤ 4.0 wt% based on a total of 100 wt% of the first negative electrode active material layer.

If (e.g., when) the first binder is included in an amount of less than 0.1 wt% based on a total of 100 wt% of the first negative electrode active material layer, the adhesive strength between the current collector and the active material (for example, the silicon-based active material) may be insufficient or unsuitable, and if (e.g., when) it is included in an amount of more than about 8.0 wt%, the binder may act as a resistor within the electrode, which may reduce the cycle-life retention rate of the rechargeable lithium battery.

For example, an amount (weight %) of the first binder included in the first negative electrode active material layer may be higher than an amount (weight %) of the second binder included in the second negative electrode active material layer. Because the first negative electrode active material layer includes a silicon-based active material, a larger amount of binder may be desired or required to increase bonding strength with the current collector.

For example, the second binder may be included in an amount of ≥ 0.1 wt% to ≤ 5 wt%, for example, ≥ 0.5 wt% to ≤ 5 wt%, ≥ 0.5 wt% to ≤ 2.5 wt%, ≥ 0.5 wt% to ≤ 2 wt%, or ≥ 0.5 wt% to ≤ 1.5 wt% based on a total of 100 wt% of the second negative electrode active material layer.

If (e.g., when) the second binder is included in an amount of less than about 0.1 wt% based on a total of 100 wt% of the second negative electrode active material layer, the adhesive strength between the current collector and the active material may be insufficient or unsuitable, and if (e.g., when) it is included in an amount of more than about 5 wt%, the cycle-life retention rate of the rechargeable lithium battery may be reduced.

The conductive material (e.g., electron conductor) may be included to provide electrode conductivity (e.g., electrical conductivity), and any suitable electrically conductive material may be used as a conductive material unless it causes a chemical change (e.g., an undesirable chemical change). Examples of the conductive material may include a carbon-based material, such as natural graphite, artificial graphite, carbon black, acetylene black, Ketjen black, a carbon fiber, a carbon nanofiber, a carbon nanotube, and/or the like; a metal-based material of a metal powder and/or a metal fiber including copper, nickel, aluminum silver, and/or the like; a conductive (e.g., electrically conductive) polymer, such as polyphenylene and/or a polyphenylene derivative; or a (e.g., any suitable) mixture thereof.

For example, the thickness of the first negative electrode active material layer may be in a range of ≥ 20 µm to ≤ 100 µm, for example, ≥ 20 µm to ≤ 80 µm, for example, ≥ 30 µm to ≤ 80 µm, ≥ 20 µm to ≤ 60 µm, or ≥ 30 µm to ≤ 50 µm.

For example, the thickness of the second negative electrode active material layer may be in a range of ≥ 20 µm to ≤ 100 µm, for example, ≥ 20 µm to ≤ 80 µm, for example, ≥ 30 µm to ≤ 80 µm, ≥ 20 µm to ≤ 60 µm, or ≥ 30 µm to ≤ 50 µm.

For example, the ratio of the thickness of the first negative electrode active material layer to the thickness of the second negative electrode active material layer may be in a range of about 4:1 to about 1:4, for example, about 3:1 to about 1:3, about 2:1 to about 1:2, or about 1.5:1 to about 1:1.5.

For example, the ratio of the thickness of the first negative electrode active material layer to the thickness of the second negative electrode active material layer may be in a range of about 1:1 to about 1:4. If (e.g., when) the foregoing numerical range is satisfied, the thickness of the second negative electrode active material layer may be substantially equal to or thicker than the thickness of the first negative electrode active material layer, so that (e.g., such that) deterioration due to direct exposure between the silicon-based active material mainly or predominantly included in the first negative electrode active material layer and the electrolyte solution may be minimized or reduced.

The negative electrode current collector may be selected from among copper foil, nickel foil, stainless steel foil, titanium foil, nickel foam, copper foam, a polymer substrate coated with a conductive (e.g., electrically conductive) metal, and a (e.g., any suitable) combination thereof.

### Rechargeable Lithium Battery

In one or more embodiments, a rechargeable lithium battery may include the negative electrode as described in one or more embodiments; a positive electrode including a positive electrode active material; and a separator between the positive electrode and the negative electrode. By including the negative electrode as described in one or more embodiments, the rechargeable lithium battery may have excellent or suitable cycle-life characteristics (for example, cycle-life characteristics during rapid charging).

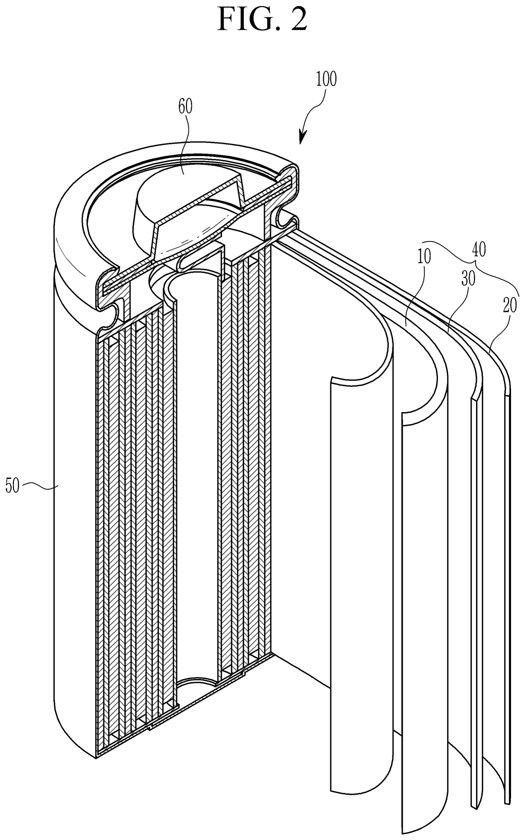

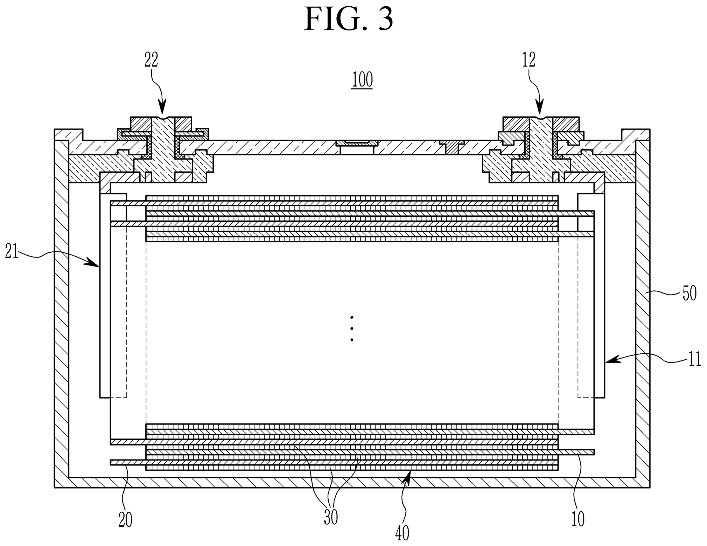

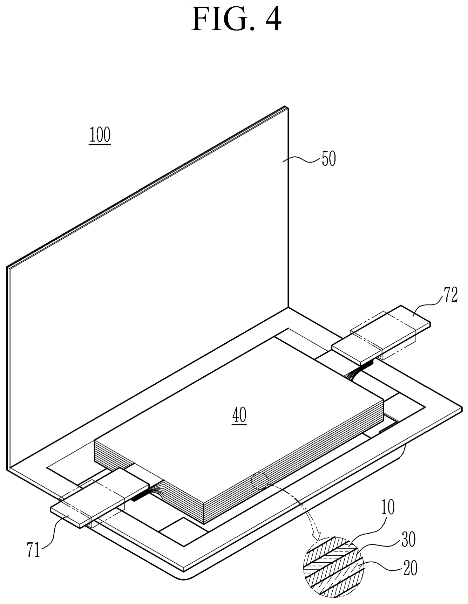

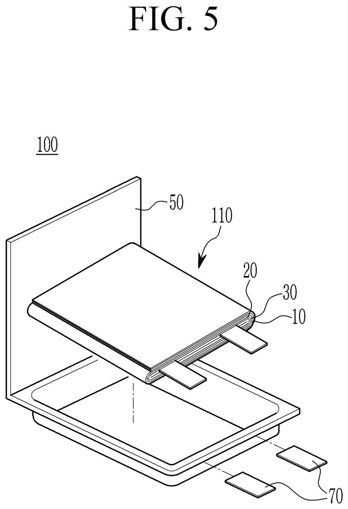

The rechargeable lithium battery may be classified into cylindrical, prismatic, pouch, coin, and/or the like depending on its shape. FIGS. 2 to 5 are schematic views illustrating rechargeable lithium batteries according to one or more embodiments. FIG. 2 illustrates a cylindrical battery, FIG. 3 illustrates a prismatic battery, and FIGS. 4 and 5 illustrate pouch-type (kind) batteries. Referring to FIGS. 2 to 5, the rechargeable lithium battery 100 may include an electrode assembly 40 including a separator 30 between a positive electrode 10 and a negative electrode 20, and a case in which the electrode assembly 40 is included. The positive electrode 10, the negative electrode 20, and the separator 30 may be impregnated with an electrolyte solution. The rechargeable lithium battery 100 may include a sealing member 60 that seals the case 50 as illustrated in FIG. 2. In one or more embodiments, in FIG. 3, the rechargeable lithium battery 100 may include a positive electrode lead tab 11, a positive electrode terminal 12, a negative electrode lead tab 21, and a negative electrode terminal 22. As illustrated in FIGS. 4 and 5, the rechargeable lithium battery 100 may include an electrode tab 70, for example, a positive electrode tab 71 and a negative electrode tab 72 serving as an electrical path to induce the current formed in the electrode assembly 40 to the outside.

A rechargeable lithium battery according to one or more embodiments may be applied to automobiles, mobile phones, and/or one or more suitable types (kinds) of electrical devices, but embodiments of the present disclosure are not limited thereto.

Hereinafter, the configuration or arrangement of a rechargeable lithium battery other than the negative electrode as described in one or more embodiments is described in more detail.

### Positive Electrode

The positive electrode for a rechargeable lithium battery may include a current collector and a positive electrode active (e.g., electrically active) material layer on the current collector. The positive electrode active material layer includes a positive electrode active (e.g., electrically active) material and may further include a binder and/or a conductive (e.g., electrically conductive) material (e.g., an electron conductor).

For example, the positive electrode may further include an additive that may act as a sacrificial positive electrode.

As the positive electrode active material, a compound capable of intercalating and deintercalating lithium (a lithiated intercalation compound) may be used. For example, at least one composite oxide of lithium and a metal selected from among cobalt, manganese, nickel, and a (e.g., any suitable) combination thereof may be used.

The composite oxide may be a lithium transition metal composite oxide, and examples thereof may include lithium nickel-based oxide, lithium cobalt-based oxide, lithium manganese-based oxide, a lithium iron phosphate-based compound, cobalt-free nickel-manganese-based oxide, or a (e.g., any suitable) combination thereof.

As an example, a compound represented by any one selected from among the following chemical formulas may be used. LiₐA_{1-b}X_{b}O_{2-c}D_{c} (0.90≤a≤1.8, 0≤b≤0.5, and 0≤c≤0.05); LiₐMn_{2-b}X_{b}O_{4-c}D_{c} (0.90≤a≤1.8, 0≤b≤0.5, and 0≤c≤0.05); LiₐNi_{1-b-c}Co_{b}X_{c}O_{2-α}D_{α} (0.90≤a≤1.8, 0≤b≤0.5, 0≤c≤0.5, and 0<α<2); LiₐNi_{1-b-c}Mn_{b}X_{c}O_{2-α}D_{α} (0.90≤a≤1.8, 0≤b≤0.5, 0≤c≤0.5, and 0<α<2); LiₐNi_{b}Co_{c}L¹_{d}GₑO₂ (0.90≤a≤1.8, 0≤b≤0.9, 0≤c≤0.5, 0≤d≤0.5, and 0≤e≤0.1); LiₐNiG_{b}O₂ (0.90≤a≤1.8 and 0.001≤b≤0.1); LiₐCoG_{b}O₂ (0.90≤a≤1.8 and 0.001≤b≤0.1); LiₐMn_{1-b}G_{b}O₂ (0.90≤a≤1.8 and 0.001≤b≤0.1); LiₐMn₂G_{b}O₄ (0.90≤a≤1.8 and 0.001≤b≤0.1); LiₐMn_{1-g}G_{g}PO₄ (0.90≤a≤1.8 and 0≤g≤0.5); Li_{(3-f)}Fe₂(PO₄)₃ (0≤f≤2); and LiₐFePO₄ (0.90≤a≤1.8).

In the chemical formulas, A may be nickel (Ni), cobalt (Co), manganese (Mn), or a (e.g., any suitable) combination thereof; X may be aluminum (Al), Ni, Co, Mn, chromium (Cr), iron (Fe), magnesium (Mg), strontium (Sr), vanadium (V), a rare earth element, or a (e.g., any suitable) combination thereof; D may be oxygen (O), fluorine (F), sulfur (S), phosphorus (P), or a (e.g., any suitable) combination thereof; G may be Al, Cr, Mn, Fe, Mg, lanthanum (La), cerium (Ce), Sr, V, or a (e.g., any suitable) combination thereof; and L¹ may be Mn, Al, or a combination thereof.

For example, the positive electrode active material may be a high nickel-based positive electrode active material in which the nickel content (e.g., amount) is greater than or equal to about 80 mol%, greater than or equal to about 85 mol%, greater than or equal to about 90 mol%, greater than or equal to about 91 mol%, or greater than or equal to about 94 mol%, and less than or equal to about 99 mol%, based on a total of 100 mol% of metal excluding (e.g., not including) lithium in a lithium transition metal composite oxide. The high-nickel positive electrode active material may achieve high capacity (e.g., high initial charge/discharge capacity) and may be applied to high-capacity, high-density rechargeable lithium batteries.

An amount of the positive electrode active material may be in a range of ≥ 90 wt% to ≤ 99.5 wt% based on a total of 100 wt% of the positive electrode active material layer, and each amount of the binder and the conductive material may be in a range of ≥ 0.5 wt% to ≤ 5 wt%, respectively, based on a total of 100 wt% of the positive electrode active material layer.

The binder may serve to well or suitably attach the positive electrode active material particles to each other and also to well or suitably attach the positive electrode active material to the current collector. Examples of the binder may include polyvinyl alcohol, carboxymethylcellulose, hydroxypropylcellulose, diacetylcellulose, polyvinylchloride, carboxylated polyvinylchloride, polyvinylfluoride, a polymer including ethylene oxide, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, nylon, and/or the like, but embodiments of the present disclosure are not limited thereto.

The conductive material (e.g., electron conductor) may be used to impart or increase conductivity (e.g., electrical conductivity) to the electrode, and any suitable material that does not cause a chemical change (e.g., an undesirable chemical change) and conducts electrons may be used in the rechargeable lithium battery. Examples of the conductive material may include a carbon-based material, such as natural graphite, artificial graphite, carbon black, acetylene black, Ketjen black, a carbon fiber, a carbon nanofiber, and carbon nanotube; a metal-based material containing copper, nickel, aluminum, silver, and/or the like., in a form of a metal powder and/or a metal fiber; a conductive (e.g., electrically conductive) polymer, such as polyphenylene and/or a polyphenylene derivative; or a (e.g., any suitable) mixture thereof.

The current collector may include Al, but embodiments of the present disclosure are not limited thereto.

### Electrolyte Solution

The electrolyte solution for a rechargeable lithium battery may include a non-aqueous (e.g., water-insoluble) organic solvent and a lithium salt.

The non-aqueous organic solvent may serve as a medium to transmit ions taking part in the electrochemical reaction of a rechargeable lithium battery.

The non-aqueous organic solvent may be a carbonate-based solvent, an ester-based solvent, an ether-based solvent, a ketone-based solvent, an alcohol-based solvent, an aprotic solvent, or a (e.g., any suitable) combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and/or the like. The ester-based solvent may include methyl acetate, ethyl acetate, n-propyl acetate, dimethylacetate, methylpropionate, ethylpropionate, decanolide, mevalonolactone, valerolactone, caprolactone, and/or the like. The ether-based solvent may include dibutyl ether, tetraglyme, diglyme, dimethoxyethane, 2-methyltetrahydrofuran, 2,5-dimethyltetrahydrofuran, tetrahydrofuran, and/or the like. The ketone-based solvent may include cyclohexanone and/or the like. The alcohol-based solvent may include ethanol, isopropyl alcohol, and/or the like, and the aprotic solvent may include nitriles, such as R-CN (wherein R is a C2 to C20 linear, branched, or cyclic hydrocarbon group, a double bond, an aromatic ring, an ether bond, and/or the like); amides, such as dimethylformamide; dioxolanes, such as 1,3-dioxolane, 1,4-dioxolane, and/or the like; sulfolanes; and/or the like.

The non-aqueous organic solvent may be used alone or in a (e.g., any suitable) mixture of two or more types (kinds).

In one or more embodiments, if (e.g., when) using a carbonate-based solvent, a cyclic carbonate and a chain carbonate may be mixed and used, and the cyclic carbonate and the chain carbonate may be mixed in a volume ratio of about 1:1 to about 1:9.

The lithium salt dissolved in the organic solvent may supply lithium ions in a rechargeable lithium battery, enable a basic operation of a rechargeable lithium battery, and improve or enhance transportation of the lithium ions between the positive electrode and the negative electrode. For example, the lithium salt may include at least one selected from among LiPF₆, LiBF₄, LiSbF₆, LiAsF₆, LiClO₄, LiAlO₂, LiAlCl₄, LiPO₂F₂, LiCl, LiBr, Lil, LiNO₃, LiSO₄, lithium acetate, LiN(SO₃C₂F₅)₂, Li(FSO₂)₂N (lithium bis(fluorosulfonyl)imide, LiFSI), lithium bis(trifluoromethanesulfonyl)imide (LiTFSI), LiC₄F₉SO₃, LiN(CₓF₂ₓ₊₁SO₂)(C_{y}F_{2y+1}SO₂) (wherein x and y are integers of 1 to 20), lithium trifluoromethane sulfonate (LiOTf), lithium tetrafluoroethanesulfonate, lithium difluorobis(oxalato)phosphate (LiDFBOP), lithium bis(oxalato) borate (LiBOB), and lithium difluoro(oxalato)borate (LiDFOB).

### Separator

Depending on the type (kind) of the rechargeable lithium battery, a separator may be present between the positive electrode and the negative electrode. The separator may include polyethylene, polypropylene, polyvinylidene fluoride, or a multilayer film of two or more layers thereof, and a mixed multilayer film, such as a polyethylene/polypropylene two-layer separator, a polyethylene/polypropylene/polyethylene three-layer separator, a polypropylene/polyethylene/polypropylene three-layer separator, and/or the like.

The separator may include a porous substrate and a coating layer including an organic material, an inorganic material, or a (e.g., any suitable) combination thereof on a surface (e.g., one surface or both surfaces (e.g., two opposite surfaces)) of the porous substrate.

The porous substrate may be a polymer film formed or composed of any one selected among polyolefin, such as polyethylene and polypropylene, polyester, such as polyethylene terephthalate and polybutylene terephthalate, polyacetal, polyamide, polyimide, polycarbonate, polyether ketone, polyarylether ketone, polyether ketone, polyetherimide, polyamideimide, polybenzimidazole, polyethersulfone, polyphenylene oxide, a cyclic olefin copolymer, polyphenylene sulfide, polyethylene naphthalate, a glass fiber, and polytetrafluoroethylene (PTFE; e.g., TEFLON^{™}), or a copolymer or mixture of two or more thereof.

The organic material may include a polyvinylidene fluoride-based polymer and/or a (meth)acrylic polymer.

The inorganic material may include inorganic particles selected from among Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a (e.g., any suitable) combination thereof, but embodiments of the present disclosure are not limited thereto.

The organic material and the inorganic material may be mixed in one coating layer, or a coating layer including an organic material and a coating layer including an inorganic material may be stacked.

### Methods

One or more embodiments of the present disclosure provide a method of manufacturing a negative electrode, wherein the method may include: preparing a first slurry, the first slurry including a first carbon-based active material, a silicon-based active material, and carbon nanotubes, the carbon nanotubes being present at ≥ 0.01 wt% to ≤ 0.2 wt% based on a total of 100 wt% of a resulting first negative electrode active material layer, and the silicon-based active material being present at ≥ 1 wt% to ≤ 40 wt% based on a total of 100 wt% of the first negative electrode active material layer; coating the first slurry on a negative electrode current collector to form the first negative electrode active material layer; preparing a second slurry, the second slurry including a second carbon-based active material; coating the second slurry on the first negative electrode active material layer to form a second negative electrode active material layer; and drying and compressing the first negative electrode active material layer and the second negative electrode active material layer, wherein a weight fraction of natural graphite in the first carbon-based active material is greater than a weight fraction of natural graphite in the second carbon-based active material.

Examples and Comparative Examples of the present disclosure are described herein. However, the following examples are only examples of one or more embodiments of the present disclosure, and embodiments of the present disclosure are not limited to the following examples.

### Examples

### Example 1

### (1) Manufacturing of Negative Electrode

A first negative electrode active material slurry was prepared by mixing 83.25 wt% of a first carbon-based active material obtained by mixing artificial graphite : natural graphite in a weight ratio of 2:8, 13.55 wt% of a silicon-carbon composite (SiC), 0.04 wt% of carbon nanotube, 1.0 wt% of carboxymethyl cellulose, and 2.16 wt% of a styrene-butadiene rubber (SBR) in a water solvent.

Subsequently, 98.5 wt% of a second carbon-based active material obtained by mixing artificial graphite:natural graphite in a weight ratio of 8:2, 1.0 wt% of carboxymethyl cellulose, and 0.5 wt% of a styrene-butadiene rubber (SBR) were mixed in a water solvent to prepare a second negative electrode active material slurry.

The first negative electrode active material slurry and the second negative electrode active material slurry were sequentially coated on a copper current collector and then, dried and compressed to manufacture a negative electrode having a first negative electrode active material layer and a second negative electrode active material layer.

Here, the first negative electrode active material layer had a thickness of 37 µm, and the second negative electrode active material layer had a thickness of 37 µm.

### (2) Manufacturing of Rechargeable Lithium Battery Cell

97.6 wt% of LiNi_{0.91}Co_{0.07}Al_{0.2}O₂, 1.3 wt% of carbon black, and 1.1 wt% of polyvinylidene fluoride were mixed in an N-methyl pyrrolidone solvent to prepare a positive electrode active material slurry. The positive electrode active material slurry was coated on an Al current collector and then, dried and compressed to manufacture a positive electrode.

The manufactured negative and positive electrodes were stacked to be opposite to (e.g., face) each other to manufacture an electrode assembly. The electrode assembly was used with an electrolyte to manufacture a rechargeable lithium battery cell.

The electrolyte was prepared by dissolving LiPF₆ in a mixed solvent of ethylene carbonate and ethylmethyl carbonate (in a volume ratio of 50:50).

### Comparative Example 1

### (1) Manufacturing of Negative Electrode

90.63 wt% of a carbon-based active material obtained by mixing artificial graphite:natural graphite in a weight ratio of 5:5, 7 wt% of a silicon-carbon composite (SiC), 0.02 wt% of carbon nanotube, 1.0 wt% of carboxymethyl cellulose, and 1.35 wt% of a styrene-butadiene rubber (SBR) were mixed in a water solvent to prepare a negative electrode active material slurry.

The prepared negative electrode active material slurry was coated on a copper current collector and then, dried and compressed to manufacture a negative electrode having a negative electrode active material layer formed thereon. The formed negative electrode active material layer had a thickness of 74 µm.

### (2) Manufacturing of Rechargeable Lithium Battery Cell

A rechargeable lithium battery cell was manufactured in substantially the same manner as in Example 1.

### Comparative Example 2

A negative electrode and a rechargeable lithium battery cell were manufactured in substantially the same manner as in Example 1 except that the second negative electrode active material slurry and the first negative electrode active material slurry were sequentially coated on the copper current collector and then, dried and compressed to manufacture the negative electrode.

The formed first and second negative electrode active material layers had each thickness of 37 µm.

### Evaluation Examples

### Evaluation Example 1: Evaluation of High-rate Charge/discharge Cycle-life

The rechargeable lithium battery cells according to Example 1 and Comparative Examples 1 and 2 were evaluated with high-rate charge/discharge cycle-life at room temperature (25 °C).

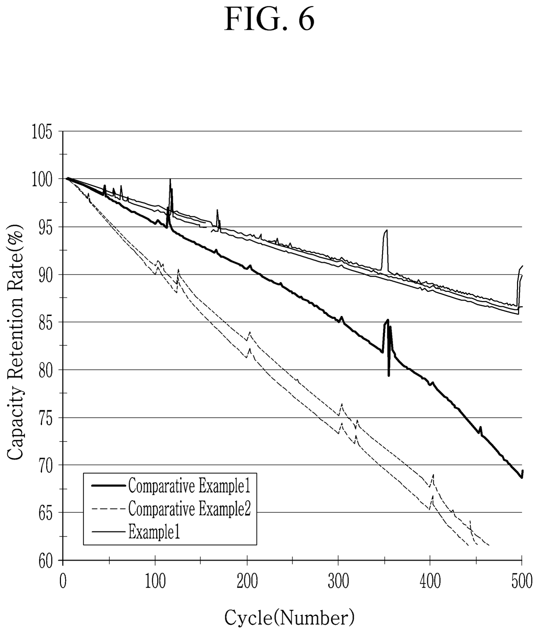

The rechargeable lithium battery cells were constant current-charged at 1 C to an upper limit voltage of 4.2 V for 1 hour and constant voltage-charged to a current of 0.025 C. Subsequently, the cells were discharged to 2.5 V at a current of 1 C for 1 hour. A capacity retention rate (%) during the process of 400 to 500 cycles repeating the charge and discharge is shown in FIG. 6.

Referring to FIG. 6, Comparative Examples 1 and 2 exhibited that the capacity retention rate decreased to less than or equal to 70% respectively after the 500 and 400 cycles, but Example 1 exhibited that the capacity retention rate maintained about 85% after the 500 cycles, which confirmed that rapid charge cycle-life characteristics were superbly excellent or suitable.

### Evaluation Example 2: Evaluation of Normal-rate Charge/discharge Cycle-life

The rechargeable lithium battery cells of Example 1 and Comparative Examples 1 and 2 were evaluated with respect to charge and discharge cycle-life at room temperature (25 °C).

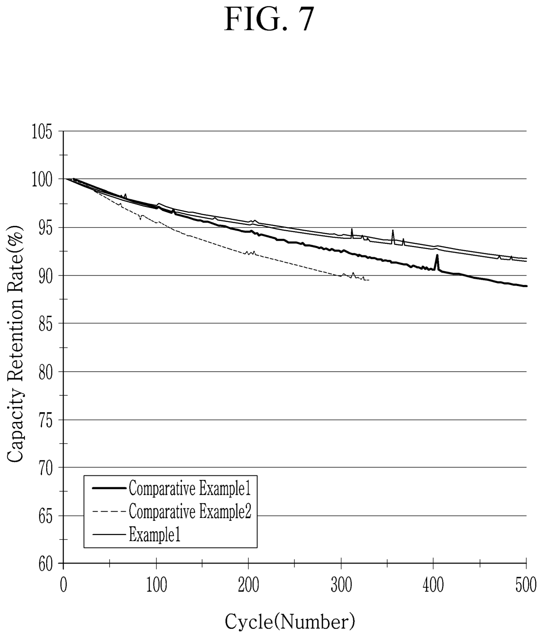

The rechargeable lithium battery cells were constant current-charged at 0.33 C to an upper limit voltage of 4.2 V and constant voltage-charged at a current of 0.025 C. Subsequently, the cells were discharged to 2.5 V at a current of 1 C. After 300 to 500 cycles repeating the charge and discharge, the cells were measured with respect to a capacity retention rate (%), which is shown in FIG. 7.

Referring to FIG. 7, Comparative Example 1 exhibited that the capacity retention rate decreased to less than or equal to 90% around 500 cycles, and Comparative Example 2 exhibited that the capacity retention rate decreased to less than or equal to 90% around 300 cycles. In contrast, Example 1 had excellent or suitable initial cycle-life characteristics and thus maintained the capacity retention rate of greater than or equal to 90% after 500 cycles.

### Evaluation Example 3: Volume Expansion Evaluation

The rechargeable lithium battery cells of Example 1 and Comparative Examples 1 and 2 were evaluated with respect to negative electrode volume expansion during the battery operation.

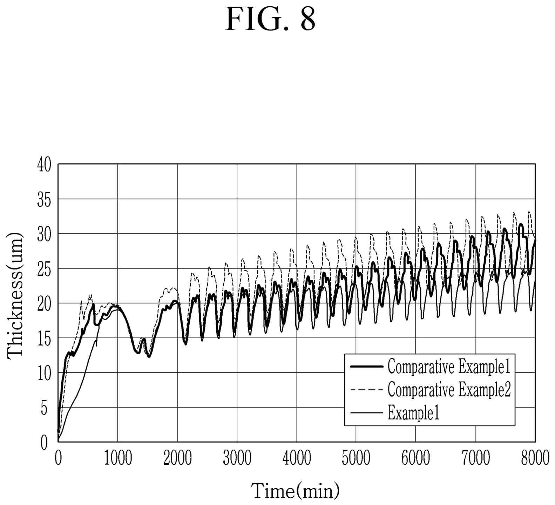

For example, each of the negative electrodes respectively included in the rechargeable lithium battery cells was used to manufacture flat pouch battery cells, which were measured with respect to thickness (µm) changes of the negative electrodes according to the number of cycles, while repetitively charging and discharging them at 0.5 C in a 45 °C chamber, and the results are shown in FIG. 8.

Referring to FIG. 8, Example 1 exhibited a significantly or substantially smaller volume change of the negative electrodes according to the number of cycles than Comparative Examples 1 and 2.

### Evaluation Example 4: SEM Analysis Evaluation (Deterioration Analysis)

The rechargeable lithium battery cells of Example 1 and Comparative Example 1 were subjected to scanning electron microscope (SEM) image analysis to check a deterioration degree of the negative electrode active materials after room temperature cycle-life.

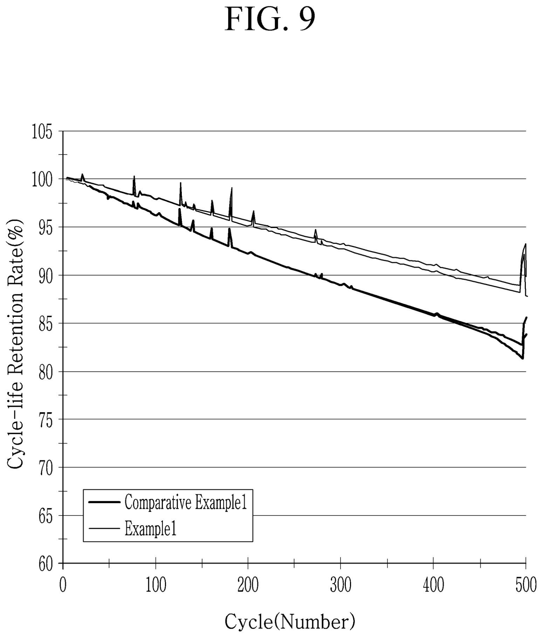

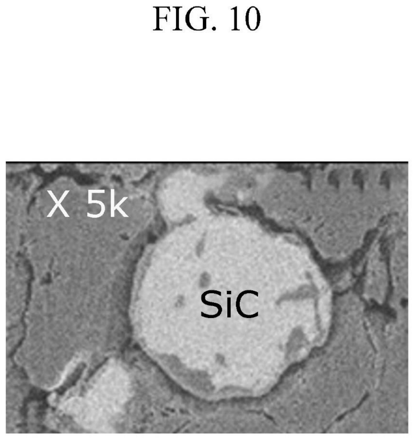

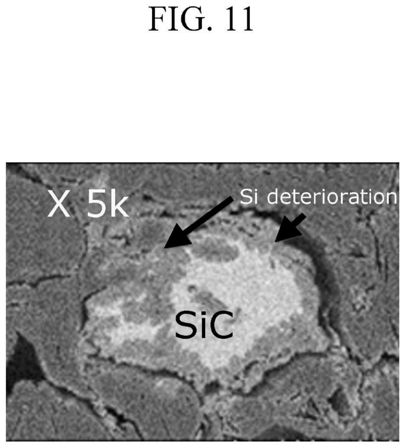

For example, as shown in FIG. 9, each rechargeable lithium battery cell was 500 cycles repetitively charged to 4.2 V at a current of 0.5 C and discharged to 2.5 V at a current of 1 C at room temperature, and SEM images of the silicon-based active materials in the negative electrodes were taken and shown respectively in FIG. 10 (Example 1) and FIG. 11 (Comparative Example 1).

Referring to FIGS. 10 and 11, Example 1 exhibited suppressed or reduced deterioration of the silicon-based active material (e.g., a degree or occurrence of deterioration of the silicon-based active material in Example 1 was suppressed or reduced), but Comparative Example 1 exhibited the deterioration of the silicon-based active material.

The foregoing Examples and Comparative Examples illustrate that the multilayer negative electrode structure described herein - wherein a first negative electrode active material layer includes a controlled combination of a first carbon-based active material, a silicon-based active material, and a set (e.g., a small) amount of carbon nanotubes, and a second negative electrode active material layer includes a second carbon-based active material with a different artificial-to-natural graphite ratio - provides significant and unexpected improvements or enhancements in rapid-charging cycle-life, dimensional stability, and suppression or reduction of active material deterioration compared to conventional single-layer or reversed-layer configurations. As demonstrated in FIGS. 6 to 11, Example 1 maintained a capacity retention rate of about 85% after 500 high-rate charge/discharge cycles and exhibited substantially reduced electrode swelling and silicon particle cracking relative to Comparative Examples 1 and 2. These results confirm that the disclosed electrode architecture, in combination with enhanced material ratios and layer thicknesses, enables rechargeable lithium batteries to achieve both (e.g., simultaneously) high energy density and superior durability under demanding operating conditions.

A battery manufacturing device, a battery management system (BMS) device, and/or any other relevant devices or components according to one or more embodiments of the present disclosure may be implemented utilizing any suitable hardware, firmware (e.g., an application-specific integrated circuit), software, and/or a (e.g., any suitable) combination of software, firmware, and hardware. For example, one or more suitable components of the device may be provided on one integrated circuit (IC) chip or on separate IC chips. Further, one or more suitable components of the device may be implemented on a flexible printed circuit film, a tape carrier package (TCP), a printed circuit board (PCB), and/or provided on one substrate. Further, the one or more suitable components of the device may be a process or thread, running on one or more processors, in one or more computing devices, executing computer program instructions and interacting with other system components to perform the one or more suitable functionalities described herein. The computer program instructions may be stored in a memory which may be implemented in a computing device utilizing a standard memory device, such as, for example, a random access memory (RAM). The computer program instructions may also be stored in other non-transitory computer readable media, such as, for example, a CD-ROM, a flash drive, and/or the like. Also, a person of skill in the art should recognize that the functionality of one or more suitable computing devices may be combined or integrated into a single computing device, or the functionality of a particular computing device may be distributed across one or more other computing devices without departing from the scope of the present disclosure.

A person of ordinary skill in the art, in view of the present disclosure in its entirety, would appreciate that each suitable feature of the one or more embodiments of the present disclosure may be combined or combined with each other, partially or entirely, and may be technically interlocked and operated in one or more suitable ways, and each embodiment may be implemented independently of each other or in conjunction with each other in any suitable manner unless otherwise stated or implied.

While the subject matter of the present disclosure has been described in connection with what is presently considered to be practical embodiments, it is to be understood that the present disclosure is not limited to the disclosed embodiments. In contrast, it is intended to cover one or more suitable modifications and equivalent arrangements included within the spirit and scope of the appended claims and equivalents thereof. It therefore will be understood that one or more embodiments described herein are just illustrative but not limitative in all aspects.

**Reference Numerals**

| | | | |
|---|---|---|---|
| 20: | negative electrode | 1: | negative electrode current collector |
| 2: | first negative electrode active material layer | | |
| 3: | second negative electrode active material layer | | |
| 100: | rechargeable lithium battery | 10: | positive electrode |
| 11: | positive electrode lead tab | 12: | positive electrode terminal |
| 21: | negative electrode lead tab | 22: | negative electrode terminal |
| 30: | separator | 40: | electrode assembly |
| 50: | case | 60: | sealing member |
| 70: | electrode tab | 71: | positive electrode tab |
| 72: | negative electrode tab | | |

## Claims

1. A negative electrode (20) comprising:
a negative electrode current collector (1);
a first negative electrode active material layer (2) on the negative electrode current collector (1); and
a second negative electrode active material layer (3) on the first negative electrode active material layer (2),
wherein:
the first negative electrode active material layer (2) comprises a first carbon-based active material, a silicon-based active material, and a carbon nanotube;
the carbon nanotube is in an amount of 0.01 wt% to 0.2 wt% based on a total of 100 wt% of the first negative electrode active material layer (2);
the second negative electrode active material layer (3) comprises a second carbon-based active material;
the first carbon-based active material comprises artificial graphite and natural graphite at a weight ratio of 0:10 to 5:5; and
the second carbon-based active material comprises the artificial graphite and the natural graphite at a weight ratio of 5:5 to 10:0.

2. The negative electrode (20) as claimed in claim 1, wherein the first carbon-based active material is in an amount of 55 wt% to 98 wt% based on a total of 100 wt% of the first negative electrode active material layer (2).

3. The negative electrode (20) as claimed in claim 1 or 2, wherein the second carbon-based active material is in an amount of 85 wt% to 99 wt% based on a total of 100 wt% of the second negative electrode active material layer (3).

4. The negative electrode (20) as claimed in any one of claims 1 3, wherein the silicon-based active material comprises silicon, a silicon-carbon composite, SiOₓ (wherein 0 < x ≤ 2), a Si-Q alloy (wherein Q is selected from among an alkali metal, an alkaline earth metal, a Group 13 element, a Group 14 element (excluding Si), a Group 15 element, a Group 16 element, a transition metal, a rare earth element, and a combination thereof), or a combination thereof.

5. The negative electrode (20) as claimed in any one of claims 1 to 4, wherein the silicon-based active material is in an amount of 1 wt% to 40 wt% based on a total of 100 wt% of the first negative electrode active material layer (2).

6. The negative electrode (20) as claimed in any one of claims 1 to 5,
wherein the second negative electrode active material layer (3) further comprises the silicon-based active material, and
wherein the silicon-based active material is in an amount of more than 0 wt% and less than or equal to 10 wt% based on a total of 100 wt% of the second negative electrode active material layer (3).

7. The negative electrode (20) as claimed in any one of claims 1 to 6,
wherein the second negative electrode active material layer (3) further comprises the carbon nanotube, and
wherein the carbon nanotube is in an amount of more than 0 wt% and less than or equal to 0.2 wt% based on a total of 100 wt% of the second negative electrode active material layer (3).

8. The negative electrode (20) as claimed in any one of claims 1 to 7,
wherein the first negative electrode active material layer (2) further comprises a first binder, and
wherein the first binder is in an amount of 0.1 wt% to 8 wt% based on a total of 100 wt% of the first negative electrode active material layer (2).

9. The negative electrode (20) as claimed in any one of claims 1 to 8,
wherein the second negative electrode active material layer (3) further comprises a second binder, and
wherein the second binder is in an amount of 0.1 wt% to 5 wt% based on a total of 100 wt% of the second negative electrode active material layer (3).

10. The negative electrode (20) as claimed in any one of claims 1 to 9, wherein a thickness of the first negative electrode active material layer (2) is in a range of 20 µm to 100 µm.

11. The negative electrode (20) as claimed in any one of claims 1 to 10, wherein a thickness of the second negative electrode active material layer (3) is in a range of 20 µm to 100 µm.

12. The negative electrode (20) as claimed in any one of claims 1 to 11, wherein a ratio of a thickness of the first negative electrode active material layer (2) to a thickness of the second negative electrode active material layer is in a range of 4:1 to 1:4.

13. A rechargeable lithium battery comprising:
the negative electrode (20) as claimed in any one of claims 1 to 12;
a positive electrode (12); and
a separator (30) between the positive electrode (12) and the negative electrode (20).

14. The rechargeable lithium battery (100) as claimed in claim 13, wherein the rechargeable lithium battery (100) has a capacity retention of at least 85% after 500 cycles at 1C and 25 °C.

15. A method comprising:
preparing a first slurry, the first slurry comprising a first carbon-based active material, a silicon-based active material, and carbon nanotubes, the carbon nanotubes being present at 0.01 wt% to 0.2 wt% based on a total of 100 wt% of a resulting first negative electrode active material layer (2), and the silicon-based active material being present at 1 wt% to 40 wt% based on a total of 100 wt% of the first negative electrode active material layer (2);
coating the first slurry on a negative electrode current collector (1) to form the first negative electrode active material layer (2);
preparing a second slurry, the second slurry comprising a second carbon-based active material;
coating the second slurry on the first negative electrode active material layer (2) to form a second negative electrode active material layer (3); and
drying and compressing the first negative electrode active material layer (2) and the second negative electrode active material layer (3),
wherein a weight fraction of natural graphite in the first carbon-based active material is greater than a weight fraction of natural graphite in the second carbon-based active material, and
wherein the method is a method of manufacturing a negative electrode (20).
